# EUROPEAN PATENT SPECIFICATION

(11) **EP 0 678 441 B1**
(45) Date of publication and mention of the grant of the patent: **30.12.1998**
(21) Application number: 95104932.9
(22) Date of filing: 03.04.1995
(51) Int. Cl.: B62D 21/11

(54) **Equipment for assembling a plurality of subframes for motor cars**
Gerät für den Zusammenbau von verschiedenen Unterrahmen für Kraftfahrzeuge
Equipement pour assembler une pluralité de cadres auxiliaires de véhicule automobiles

(30) Priority: 22.04.1994 IT TO940083
(43) Date of publication of application: 25.10.1995
(73) Proprietor: FIAT AUTO S.p.A., 10135 Torino (IT)
(72) Inventor: Gandiglio, Romolo, I-10020 Cambiano, (Torino) (IT)
(74) Representative: Serra, Francesco

(56) References cited:
- EP-A- 0 530 594
- GB-A- 2 089 744
- US-A- 4 342 146
- PATENT ABSTRACTS OF JAPAN vol. 15 no. 49 (M-1078) ,6 February 1991 & JP-A-02 283577 (NISSAN) 21 November 1990,
- PATENT ABSTRACTS OF JAPAN vol. 10 no. 277 (M-519) [2333] ,19 September 1986 & JP-A-61 098676 (NISSAN) 16 May 1986,

## Description

The present invention relates to a equipment for assembling a plurality of subframes for motor cars.

As is known, modern motor-car construction technology uses subframes which are positioned in the front and/or rear portions of the motor car for supporting the pivoting arms of the respective suspensions. These arms are normally fixed to the subframes by means of bushes engaged in brackets, eyes or the like.

The frames described above also normally serve for supporting the propulsion unit of the motor car and other devices such as the radiator, the oil cooler, the air-conditioning unit, etc.

The aforesaid frames are preassembled and completed at the side of the line and are then fixed to the body.

EP-A-0 530 594 discloses a subframe for a motor vehicle which has two side plates which extends in the longitudinal direction of the vehicle and are connected with one another with cross-members.

The subframe can be used in vehicles of different conceptions.

The subframe can be adapted to the local situation of the vehicle body or of the drive unit or to a vehicle with wheel steering.

Frames of the type mentioned above normally comprise a pair of side-members which, in use, are substantially parallel to the longitudinal profile of the motor car and are joined together by means of two cross-members of which, in use, one is disposed near the end portion of the motor car whilst the other is disposed near the passenger compartment.

Since, as stated, the side-members comprise the points for the attachment of the suspension, clearly the aforementioned frames are restricted by the track of the motor car for which they are intended. In other words, each motor car with a given track requires its own particular subframe. It is also clear that, in a modern automotive industry in which tens of different models of motor cars have to be constructed, usually each with a different track, it is necessary to provide a subframe for practically every production model. This involves the storage of a number of subframes already assembled, each of which can be associated with the model having the corresponding track, or in any case, a store containing loose parts for assembly to form the subframe required for each production model.

The foregoing constitutes a great burden on costs in terms of storage cost and in terms of space taken up for storage. Another aspect which contributes to increased costs is the need to construct the dies from which to form the parts which, after assembly, will form the subframe. Since, as stated, the frame is formed by four parts, four dies are required per model in construction, multiplied by the number of models having different tracks.

The object of the present invention is to provide equipment for the assembly of a plurality of subframes for motor cars which prevents the aforementioned problems, subframes for motor cars with different tracks to be assembled with the use of a small number of components.

The present invention achieves the aforementioned objects by means of equipment for assembling a plurality of subframes for motor cars having the specific characteristics recited in the following claims.

Further characteristics and advantages of the present invention will become clear in the course of the detailed description which follows, given purely by way of non-limiting example, with reference to the appended drawings in which:
Figure 1 is an exploded, perspective view of a subframe according to the invention,
Figure 2 is a perspective view of the frame of Figure 1 in its assembled configuration,
Figure 3 is an exploded, perspective view of a second frame according to the invention,
Figure 4 is a perspective view of the frame of Figure 3 in its assembled configuration,
Figure 5 is a perspective view of a rear suspension-support frame according to the invention, and
Figure 6 is a perspective view of the frame of Figure 5 in a different configuration.

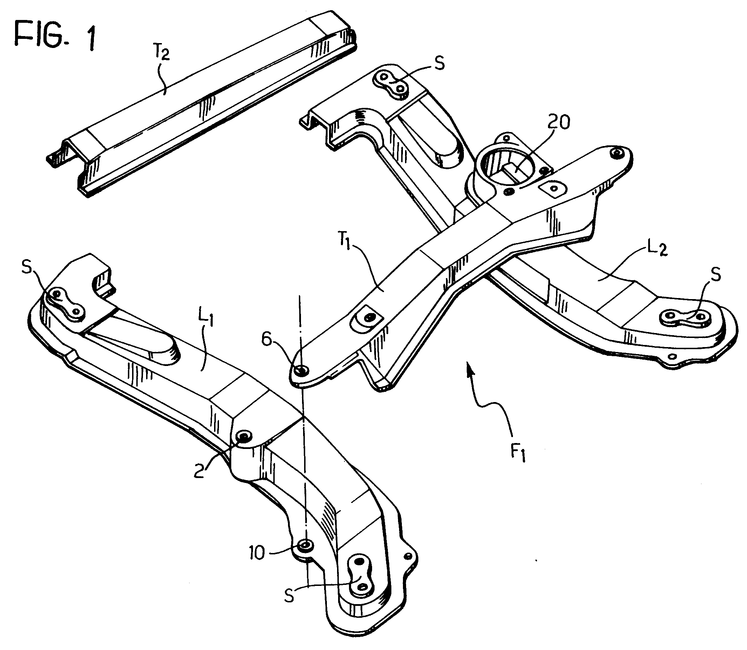

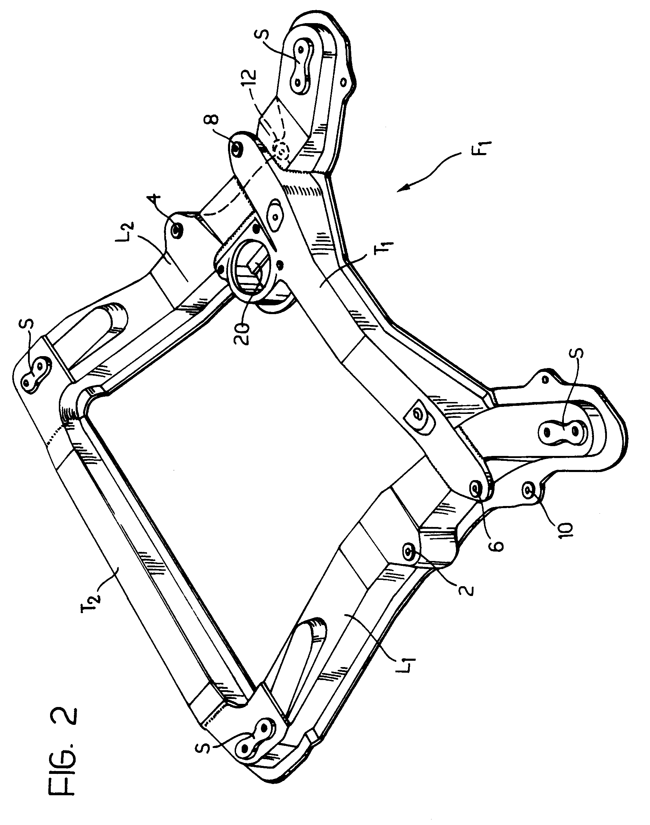

With reference to Figures 1 and 2, in which corresponding elements are indicated by the same reference numerals, side-members of substantially equal length are indicated L₁ and L₂ and cross-members which, in use, are fixed to the side-members L₁ and L₂ to form a frame F₁ according to the invention, are indicated T₁ and T₂.

In use, the cross-member T₂ is adjacent the outer portion of the motor car whilst the cross-member T₁ is disposed in a position facing the passenger compartment.

The side-members L₁ and L₂ and the cross-member T₁ may be formed, for example, as aluminium castings, whilst the cross-member T₂ is formed as an extrusion, for example, of steel.

The cross-member T₂ carries the seats (not shown) for the attachment of the radiator, the oil cooler, and other devices.

The side-members L₁ and L₂ have respective holes 2 and 4, each of which houses a first bush (not shown) for one of the attachments of the respective suspension arms, the second bush being inserted between the holes 6 and 8 in the cross-member T₁ and the holes 10 and 12 in the side-members L₁ and L₂.

The side-members L₁ and L₂ have seats S for fixing to the body, for example, by screwing.

The cross-members T₁ and T₂ have profiles complementary to the profiles of the side-members L₁ and L₂ in the regions of attachment thereto and the members are fixed together by welding.

The cross-member T₁ carries a seat 20 for housing an engine-mounting block (not shown).

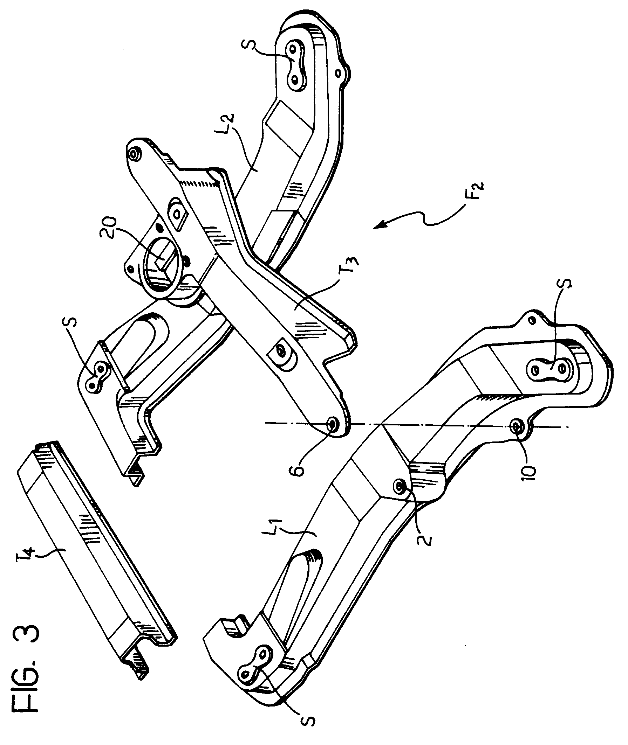

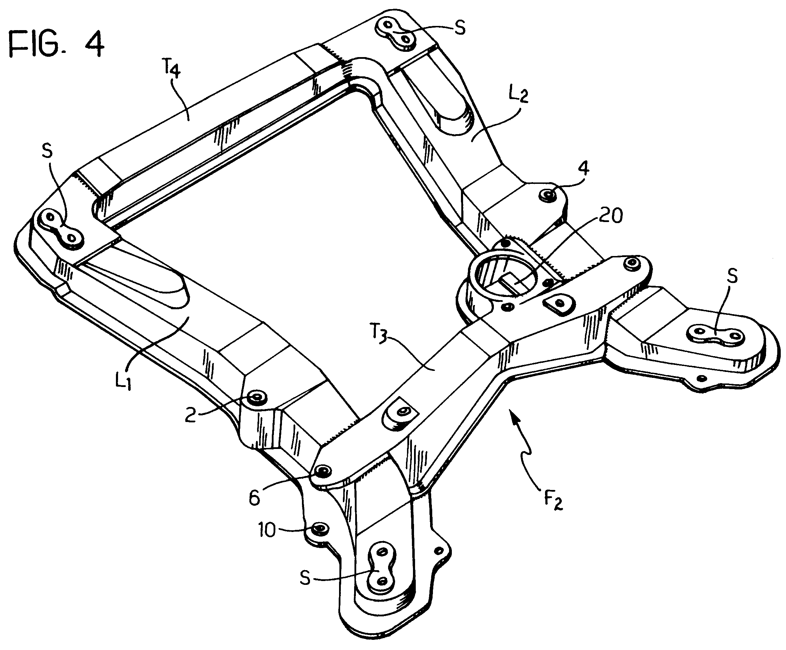

With reference to Figures 3 and 4, in which details identical or corresponding to those of Figures 1 and 2 are indicated by the same reference numerals, the side-members L₁ and L₂ are joined together by cross-members T₃ and T₄ which are shorter than the corresponding cross-members T₁ and T₂ of Figures 1 and 2, but which have identical end portions and are formed of the same material, in order to form a frame F₂ according to the invention.

As can be seen from Figure 4, the assembled frame F₂ has the same characteristics as the frame F₁ of Figure 2 but with smaller transverse dimensions, that is, the frame produced is suitable for cars with a smaller track than that of Figure 2, whilst retaining all the structural characteristics of the frame of Figure 2.

It should be noted that the seat 20 for the engine-mounting block in the frame F₂ shown in Figure 4 is displaced in the region in which this displacement does not cause interference with the auxiliary members of the engine (at least for engines arranged transversely).

The saving of components in comparison with the frames constructed according to the prior art is clear. In fact, the side-members L₁ and L₂ are identical in the embodiments of Figures 1, 2, 3 and 4; the ends of the cross-members T₁, T₂; T₃, T₄ for the attachment of the side-members L₁ and L₂ correspondingly remain identical.

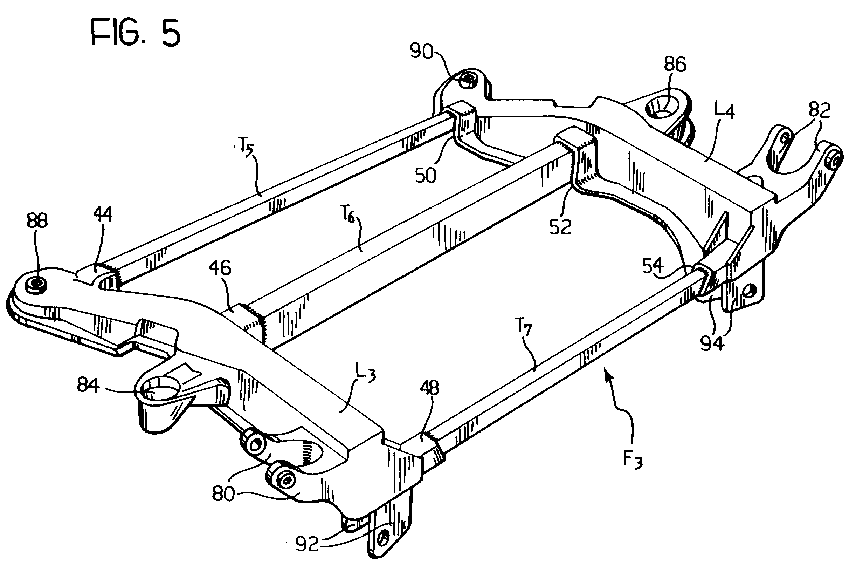

With reference now to Figure 5, which shows a rear suspension-support subframe F₃, two side-members, indicated L₃ and L₄ have seats 44, 46, 48; 50, 52, 54, respectively, for the housing and fixing of cross-members T₅, T₆, T₇ formed as bars or tubes with cross-sections corresponding to those of the seats 44, 46, 48 and 50, 52, 54.

The two side-members L₃ and L₄ comprise arms 80 and 82, respectively, for the attachment of the arms of the respective suspension and seats 84 and 86 for supporting the suspension springs. The side-members L₃ and L₄ of Figure 5 also comprise respective through holes 88 and 90, and respective pairs of brackets 92 and 94 for the fixing of the frame to the body, for example, by screwing.

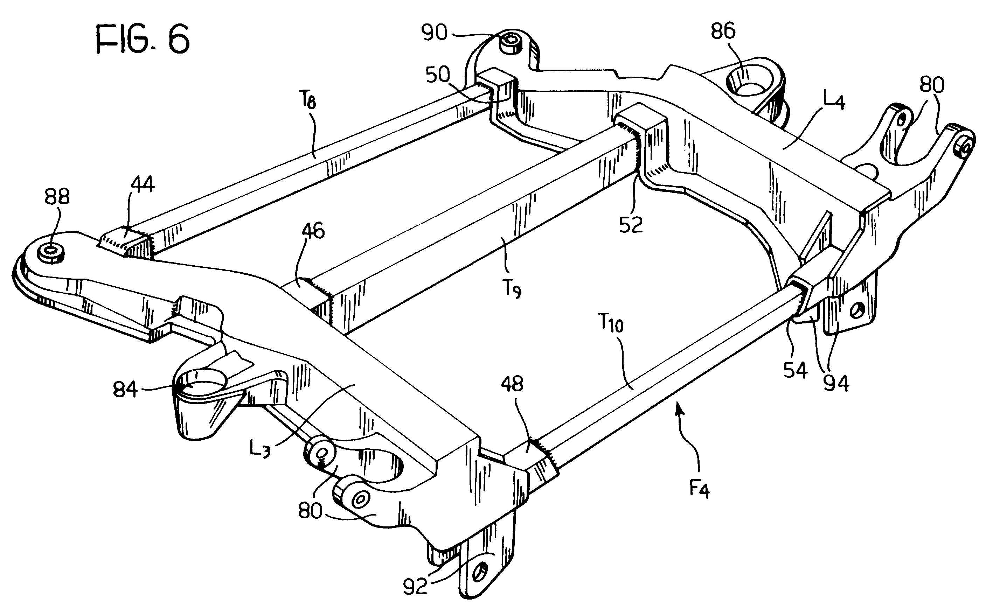

With reference now to Figure 6, in which parts the same as or corresponding to those of Figure 5 are indicated by the same reference numerals, the subframe F₄ has smaller transverse dimensions, owing to the use of bars or tubes T₈, T₉, T₁₀ shorter than the corresponding bars T₅, T₆, T₇ of Figure 5, and is thus suitable for fitting in motor cars with smaller tracks.

The tubes or bars T₅, T₆, T₇, T₈, T₉, and T₁₀ may be of steel or aluminium and can be fixed to the respective seats 44, 46, 48 and 50, 52, 54, for example, by welding or gluing.

The advantages of the equipment according to the invention are clear from the foregoing. Modular subframes suitable for fitting in motor cars having different tracks can be produced, the side-members being kept unchanged and the cross-members, tubes or bars which join them together being changed according to the desired track, with clear savings in the number of parts necessary to construct them.

Naturally, the principle of the invention remaining the same, the details of construction and forms of embodiment may be varied widely with respect to those described and illustrated and for the purposes specified, without thereby departing from the scope of the present invention as defined by the claims.

## Claims

1. Equipment for assembling a plurality of subframes (F₁, F₂, F₃, F₄) for motor cars, for supporting the suspension arms comprising:
- at least two pairs of side-members (L₁, L₂, L₃, L₄) of substantially equal length,
- at least two sets of cross-members (T₁, T₂, T₃, T₄, T₅, T₆, T₇, T₈, T₉, T₁₀), each of which comprises at least two cross-members; the pair of side-members (L₃, L₄) having seats (44, 50, 46, 52, 48, 54) for the engagement of the set of cross-members (T₅, T₆, T₇, T₈, T₉, T₁₀), characterised in that the cross-members of one set (T₁, T₂, T₅, T₆, T₇) have respective predetermined lengths which differ from those of the corresponding cross-members of the other set (T₃, T₄, T₈, T₉, T₁₀), the cross-members of each set (T₁, T₂, T₃, T₄, T₅, T₆, T₇, T₈, T₉, T₁₀) being capable of being selectively associated with and fixed to a respective pair of side-members (L₁, L₂, L₃, L₄), to provide at least two different subframes (F₁, F₂, F₃, F₄) suitable for use in motor vehicles with different tracks.

2. Equipment according to Claim 1, characterised in that the pairs of side-members (L₁, L₂, L₃, L₄) are fixed to the respective sets of cross-members (T₁, T₂, T₃, T₄, T₅, T₆, T₇, T₈, T₉, T₁₀), by welding.

3. Equipment according to Claim l, characterised in that the cross-members (T₅, T₆, T₇, T₈, T₉, T₁₀) are formed as steel tubes.

4. Equipment according to Claim 1, characterised in that the cross-member (T₅, T₆, T₇, T₈, T₉, T₁₀) are formed as aluminium tubes.

5. Equipment according to any one of the preceding Claims, characterised in that the pairs of side-members (L₁, L₂) are formed as aluminium castings.

6. Equipment according to any one of the preceding claims, characterised in that the cross-members (T₁, T₃) are formed as aluminium castings.

7. Equipment according to any one of the preceding claims, characterised in that the cross-members (T₂, T₄) are formed as steel extrusions.

## Patentansprüche

1. Baugruppe, um eine Vielzahl von Nebenrahmen (F₁, F₂, F₃, F₄) für Kraftfahrzeuge zusammenzubauen, um die Arme der Aufhängungen zu tragen, wobei die Baugruppe enthält:
- zumindest zwei Paare von Seitenelementen (L₁, L₂, L₃, L₄), die im wesentlichen gleich lang sind,
- zumindest zwei Garnituren von Querelementen (T₁, T₂, T₃, T₄, T₅, T₆, T₇, T₈, T₉, T₁₀), von denen jede zumindest zwei Querelemente besitzt; wobei jedes Paar von Seitenelementen (L₃, L₄) mit Sitzen (44, 50, 46, 52, 48, 54) versehen ist, um in den Sitz von Querelementen (T₅, T₆, T₇, T₈, T₉, T₁₀) einzugreifen, dadurch gekennzeichnet, dass die Querelemente von einer Garnitur (T₁, T₂, T₅, T₆, T₇) entsprechende vorgegebene Längen besitzen, die sich von den Längen der entsprechenden Querelemente der anderen Garnitur (T₃, T₄, T₈, T₉, T₁₀) unterscheiden, wobei die Querelemente einer jeden Garnitur (T₁, T₂, T₃, T₄, T₅, T₆, T₇, T₈, T₉, T₁₀) wahlweise einem entsprechenden Paar von Seitenelementen (L₁, L₂ L₃, L₄) zugeordnet und an diesen befestigt werden können, um zumindest zwei verschiedene Nebenrahmen (F₁, F₂, F₃, F₄) zu liefern, die für eine Verwendung in Kraftfahrzeugen mit unterschiedlichen Spurbreiten geeignet sind.

2. Baugruppe gemäß Anspruch 1, dadurch gekennzeichnet, dass die Paare von Seitenelementen (L₁, L₂, L₃, L₄) an den entsprechenden Garnituren von Querelementen (T₁, T₂, T₃, T₄, T₅, T₆, T₇, T₈, T₉, T₁₀) angeschweisst werden.

3. Baugruppe gemäß Anspruch 1, dadurch gekennzeichnet, dass die Querelemente (T₅, T₆, T₇, T₈, T₉, T₁₀) aus Stahlrohren hergestellt werden.

4. Baugruppe gemäß Anspruch 1, dadurch gekennzeichnet, dass die Querelemente (T₅, T₆, T₇, T₈, T₉, T₁₀) aus Aluminiumrohren hergestellt werden.

5. Baugruppe gemäß irgendeinem der bisherigen Ansprüche, dadurch gekennzeichnet, dass die Paare von Seitenelementen (L₁, L₂) aus Aluminiumguss hergestellt werden.

6. Baugruppe gemäß irgendeinem der bisherigen Ansprüche, dadurch gekennzeichnet, dass die Querelemente (T₁, T₃) aus Aluminiumguss hergestellt werden.

7. Baugruppe gemäß irgendeinem der bisherigen Ansprüche, dadurch gekennzeichnet, dass die Querelemente (T₂, T₄) aus Stahl gepresst werden.

## Revendications

1. Appareillage d'assemblage de plusieurs châssis auxiliaires (F1, F2, F3, F4) pour véhicule à moteur, destinés au support des bras de suspension, comprenant:
- au moins deux paires de longerons (L1, L2, L3, L4) de longueurs pratiquement égales, et
- au moins deux ensembles de traverses (T1, T2, T3, T4, T5, T6, T7, T8, T9, T10) comprenant chacun au moins deux traverses, la paire de longerons (L3, L4) ayant des sièges (44, 50, 46, 52, 48, 54) destinés à coopérer avec l'ensemble de traverses (T5, T6, T7, T8, T9, T10), caractérisé en ce nue les traverses d'un premier ensemble (T1, T2, T5, T6, T7) ont des longueurs respectives prédéterminées différentes de celles des traverses correspondantes de l'autre ensemble (T3, T4, T8, T9, T10), les traverses de chaque ensemble (T1, T2, T3, T4, T5, T6, T7, T8, T9, T10) pouvant être associées sélectivement et fixées à une paire respective de longerons (L1, L2, L3, L4) pour la formation d'au moins deux sous-châssis différents (F1, F2, F3, F4) convenant à des véhicules à moteur ayant des voies différentes.

2. Appareillage selon la revendication 1, caractérisé en ce nue les paires de longerons (L1, L2, L3, L4) sont fixées aux ensembles respectifs de traverses (T1, T2, T3, T4, T5, T6, T7, T8, T9, T10) par soudage.

3. Appareillage selon la revendication 1, caractérisé en ce nue les traverses (T5, T6, T7, T8, T9, T10) sont formées de tubes d'acier.

4. Appareillage selon la revendication 1, caractérisé en ce nue les traverses (T5, T6, T7, T8, T9, T10) sont formées de tubes d'aluminium.

5. Appareillage selon l'une quelconque des revendications précédentes, caractérisé en ce nue les paires de longerons (L1, L2) sont formées d'aluminium moulé.

6. Appareillage selon l'une quelconque des revendications précédentes, caractérisé en ce nue les traverses (T1, T3) sont formées d'aluminium moulé.

7. Appareillage selon l'une quelconque des revendications précédentes, caractérisé en ce que les traverses (T2, T4) sont formées de extrusions d'acier.
